Europäisches Patentamt

European Patent Office

Office européen des brevets

(19)

(11) Numéro de publication: **0 121 636**
**B1**

(12) **FASCICULE DE BREVET EUROPEEN**

(45) Date de publication du fascicule du brevet: **12.10.88**

(51) Int. Cl.⁴: **F 03 D 7/04**

(21) Numéro de dépôt: **83402560.3**

(22) Date de dépôt: **30.12.83**

(60) **Une requête selon la Règle 88 CBE pour correction des dessins a été reçue en date du 120384.**

(54) **Perfectionnements aux moteurs à vent et aérogénérateurs.**

(30) Priorité: **30.12.82 FR 8222121**
**08.06.83 FR 8309486**

(43) Date de publication de la demande:
**17.10.84 Bulletin 84/42**

(45) Mention de la délivrance du brevet:
**12.10.88 Bulletin 88/41**

(84) Etats contractants désignés:
**BE CH DE GB IT LI NL**

(56) Documents cités:
**WO-A-83/00195**
**DE-C- 904 400**
**FR-A-2 291 378**
**FR-A-2 355 178**
**FR-A-2 506 853**
**NL-C- 57 405**
**US-A-4 331 881**
**US-A-4 352 629**

**Eerst weten dan zweven (Theorie voor het Zweefvliegbewijs - 1977 - Koninklijke drukkerij Broese + Peereboom bv - Breda 1977 p.189**

(73) Titulaire: **AEROGENERATEURS CARRE**
**F-89730 Mailly-la-Ville (FR)**

(72) Inventeur: **Carré, Jean**
**F-89730 Mailly-la-Ville (FR)**
Inventeur: **Monceau, Jean-Paul**
**B.P. 17**
**F-58500 Clamecy (FR)**

(74) Mandataire: **Bruder, Michel**
**Cabinet Michel Bruder 10, rue de la Pépinière**
**F-75008 Paris (FR)**

Courier Press, Leamington Spa, England.

## Description

La présente invention concerne des perfectionnements aux moteurs à vent et aérogénérateurs comportant un rotor à hélice à pas variable et régulant leur vitesse de rotation par orientation des pales vers l'éclipsage ou la mise en drapeau des pales, par état d'équilibre entre une force fonction de la vitesse du rotor et une autre force élastique s'y opposant.

Dans un aérogénérateur du type précité l'axe constituant le pivot de chaque pale à pas variable est situé dans la partie avant du profil de la pale, au point d'équilibre de portance aréodynamique transversale de celle-ci, c'est-à-dire environ au quart avant des types de profils utilisée, ceux-ci étant définis comme devant posséder une bonne stabilité de ce point d'équilibre. De ce fait le section ou la longueur extérieure du tracé du profil de la pale est beaucoup plus importante en arrière de ce point d'équilibre aérodynamique, vers le bord de fuite, qu'elle ne l'est vers l'avant, vers le bord d'attaque. La masse arrière de la pale se trouve donc beaucoup plus importante que la masse avant.

Pour qu'une telle hélice réceptrice fonctionne, la corde du profil de chaque pale doit posséder un angle d'hélice par rapport à son plan de rotation. De ce fait les masses arrière et avant du profil de la pale ne se trouvent pas alignées dans le plan de rotation du rotor, passant par l'axe de pivotement de la pale sur elle-même, mais elles se trouvent respectivement en arrière et en avant de ce plan. Ces masses arrière et avant étant inégales et la masse arrière étant prédominante, il en résulte, quel que soit le régime de rotation du rotor, l'existence d'une masse arrière en déséquilibre ou perturbatrice par rapport à la masse avant de la pale.

Lors d'un ralentissement de la rotation de l'hélice dû à un effet quelconque tel que baisse du vent, remous, retard de régulation inversant l'incidence du profil, mise en utilisation de la puissance de la machine etc, une telle décélération crée une force perturbatrice ou parasitaire résultant de l'énergie cinétique de la masse arrière en déséquilibre de la pale. Cette force perturbatrice tend alors à faire pivoter la pale vers la mise en drapeau, avec toutes les conséquences de cette action.

En particulier, par grand vent, la régulation éloignant l'application de cette force et en façon plus sensible si la machine n'est pas en charge, en cas de ralentissement du vent ou de retard de régulation, l'hélice ralentissant, la force perturbatrice résultant de l'énergie cinétique de la masse arrière en déséquilibre de la pale entraîne un pivotement de cette pale autour de son axe et un transfert de la portance qui transforme l'hélice précédemment réceptrice en hélice propulsive absorbant de l'énergie. Cette absorption conduit à son tour à une augmentation de la décélération du rotor avec amplification du phénomène jusqu'à disparition de l'énergie cinétique de l'ensemble. Cette phase terminée, les pales reviennent face au vent, l'hélice repart et le phénomène peut alors recommencer.

Une telle alternance rapide et violente de situations dans lesquelles l'hélice est alternativement réceptrice et propulsive, présente l'inconvénient qu'elle rend la machine peu productrice et qu'en outre elle peut entraîner la destruction rapide de celle-ci. Il y a lieu de signaler que la mise en charge d'utilisation de la machine entraîne le même effet de décélération et par conséquent le même effet d'éclipsage de la pale, d'où une disparition temporaire de l'angle d'incidence et de possibilité de puissance, avec des possibilitiés d'apparition de phénomènes de pompage. Cependant, dans ce cas, du fait de l'absorption de l'énergie cinétique du rotor par utilisation extérieure de la puissance, l'effet est plus limité et le risque de voir l'hélice devenir propulsive est moindre.

On connaît déjà des aérogénérateurs pourvus d'un dispositif de régulation des pales de l'hélice. L'aérogénérateur décrit dans le document W083/ 00195 (publié le 20.01.83) est du type à régulation bloquante, autrement dit il existe un accouplement rigide entre les pales et l'actionneur de commande du pas de ces pales fonctionnant d'une manière irréversible. Cet aérogénérateur comporte un tachomètre prévu pour mettre en marche un moteur intervanant pour ajouter l'angle d'incidence des pales. Ce tachomètre exerce une force de régulation résultant de l'action antagoniste d'une force dépendant de la vitesse de rotation et de force de rappel élastique. Un tel aérogénérateur présente l'inconvénient d'être à action lente et de ce fait de faire subir à ce type d'appareil des surpressions et surpuissances temporaires importantes face aux variations rapides de la vitesse du vent.

Le brevet NL—C—57—405 décrit un aérogénérateur comportant une liaison d'orientation du pas des pales qui est souple et éventuellement capable d'amortir quelques fluctuations du vent mais aucunement de contrarier l'effet de la masse pertubatrice.

Le brevet US—A—4 352 629 décrit une machine éolienne à pas variable à l'opposé de la mise en drapeau, régulant par décrochement aérodynamique, par mise de la corde efficace du profil de l'aile dans le plan de rotation de l'hélice. De ce fait la masse non équilibrée ne peut devenir perturbatrice. Une telle technique a l'inconvénient de ne point entraîner, lors de la régulation, une diminution régulière et stable des pressions exercées par le vent sur la machine, par le fait que les surfaces restent entièrement exposées à la pression du vent.

Dans certaines constructions aéronautiques des poids ou autres artifices ont été appliqués sur les ailerons de plan d'aile, ainsi qu'il est décrit par exemple dans l'article Eerst weten,... dan zweven (Theorie voor hat zweefvliegbewys) 5e druk 1977, Kon. Drukkery Broese Peereboom bv Breda, page 189. Il s'agit ici d'un avion les plans d'ailes étant fixes dans les exemples décrits.

La présente invention vise à remédier à ces inconvéniente en procurant, à ces aérogénérateurs ou moteurs à vent, des moyens particulièrement simples permettant d'éviter le tendance à la mise en drapeau des pales en ces de décélération du rotor.

L'invention a également pour but d'obtenir une meilleure utilisation des vents de vitesse inférieure à la vitesse nominale pour laquelle l'aérogénérateur a été conçu, un contrôle exact de la vitesse de rotation de l'hélice de l'aérogénérateur et par conséquent de la période du courant alternatif produit éventuellement par celui-ci, et un contrôle et une limitation stricts de la puissance de sortie de l'aérogénérateur.

A cet effet cet aérogénérateur ou moteur à vent comportant un rotor à hélice à pas variable régulant vers la mise en drapeau, dont les pales sont montées pivotantes autour de leurs axes respectifs en étant elles-mêmes déséquilibrées dynamiquement et présentant de ce fait une masse arrière en déséquilibre ou perturbatrice, et un dispositif élastique de régulation mécanique d'équilibre de la position des pales exerçant sur chacune des pales une force de régulation résultant de l'action antagoniste d'une force dépendant de la vitesse de rotation et d'une force de rappel élastique, cette force de régulation assurant le maintien de la pale dans la position angulaire voulue autour de son axe respectif lorsque le rotor tourne à se vitesse nominale, est caractérisé en ce qu'il comporte des moyens de compensation sensibles à la décélération du rotor pour exercer automatiquement et immédiatement sur chaque pale, en cas de décélération du rotor, une force différente des forces en équilibre assurant la régulation, cette force étant sensiblement égale et opposée à la force perturbatrice créée par l'énergie cinétique de la masse arrière ou en déséquilibre de la pale de manière à bloquer instantanément la pale dès le début de la décélération dans la position angulaire qu'elle occupe alors.

Suivant une première forme d'exécution de l'invention, les moyens de compensation peuvent être constitués, pour chaque pale, par une masse placée sur l'avant du profil de la pale en opposition à la masse arrière perturbatrice et supportée uniquement par la pale. En pratique ces messes qui se trouvant être supportées par les pales, augmentent considérablement le masse de celles-ci et les fatigues dues aux effets centrifuges, si bien que l'emploi de ce moyen ne pourra être retenu que rarement.

Suivant une variante d'exécution de l'invention les moyens de compensation sont de préférence constitués par une ou plusieurs masses indépendantes des pales et s'opposant à la masse arrière perturbatrice de celles-ci, ces masses indépendantes étant capables de supporter leur propre contrainte centrifuge ou les reportant sur des éléments du rotor subissant des fatigues moins élevées. Par exemple, les moyens de compensation peuvent être avantageusement constitués par un anneau formant un volant d'inertie occupant le maximum du diamètre disponible.

Dans le cas d'un équilibrage ou d'une commande de rotation des pales pour la régulation par des dispositifs hydrauliques ou pneumatiques les moyens de compensation peuvent être constitués par une masse inertielle réglant de façon appropriée les écoulement fluides de ces dispositifs hydrauliques ou pneumatiques.

La liaison entre les pales et les dispositifs hydrauliques ou pneumatiques est alors telle que le ralentissement de la masse inertielle compensatrice engendre l'apparition d'une force opposée à la force perturbatrice créée par l'énergie cinétique de la masse arrière de chaque pale, entraînant ainsi la compensation de cette masse arrière.

L'aérogénérateur suivant l'invention offre plusieurs autres avantages.

En premier lieu, du fait que les masses et les forces sont établies pour les régimes de vent les plus élevés envisageables, c'est-à-dire les cas où les poles sont très largement éclipsées et la masse perturbatrice (masse arrière en déséquilibre de la pale) est très éloignée du plan de rotation passant par l'axe de pivotement de la pale, la force compensatrice devient excédentaire au fur et à mesure que le vent et par conséquent le pas des pales diminue et que la force perturbatrice se rapproche de ce plan. Ceci est un avantage important car, par suite d'un ralentissement dû à l'utilisation de la machine, c'est-à-dire à une mise en charge, l'excédent de la force compensatrice s'exerçant sur les pales donne à celles-ci l'incidence nécessaire pour la mise en charge aérodynamique, la portance exigée de chaque pale demandant à être de plus en plus importante par suite de la diminution de la résultante de l'effet moteur, à mesure que la corde du profil de la pale tend à s'aligner sur le plan de rotation. Ce moyen permet donc d'améliorer la production des machines tout en évitant des phénomènes de pompage. De plus, par les mêmes effets agissant inversement il stabilise et limite les efforts d'accélération en rotation dus aux accroissements de la vitesse du vent et il modère la marche et la régulation de la machine.

Dans un aérogénérateur connu du type précité le rotor comporte également un dispositif de régulation comprenant un plateau de régulation coaxial pouvant subir un débattement angulaire déterminé par rapport au rotor, des moyens de transmission pour transmettre le mouvement de pivotement des pales autour de leurs axes à ce plateau de régulation et des organes de rappel élastiques disposés entre le bâti du rotor et le plateau de régulation afin de maintenir les pales dans la position angulaire voulue, autour de leurs axes respectifs, lorsque le rotor tourne à sa vitesse nominale, la liaison entre les pales et le plateau étant telle que le ralentissement du plateau par rapport au rotor entraîne une augmentation du pas des pales allant vers la mise en drapeau et qu'au contraire une accélération du plateau entraîne une diminution du pas.

On décrira ci-après, à titre d'exemples non limitatifs, diverses formes d'exécution de la présente invention, en référence au dessin annexé auf lequel:

La figure 1 est une vue en perspective schématique d'un aérogénérateur suivant l'invention pourvu de moyens compensant la force perturbatrice due à l'énergie cinétique de la masse arrière en déséquilibre d'une pale.

La figure 2 est en schéma illustrant l'action des moyens de compensation.

La figure 3 est une vue en coupe axiale partielle de l'aérogénérateur pourvu des moyens de compensation représentés sur la figure 1.

La figure 4 est un schéma d'une variante d'exécution.

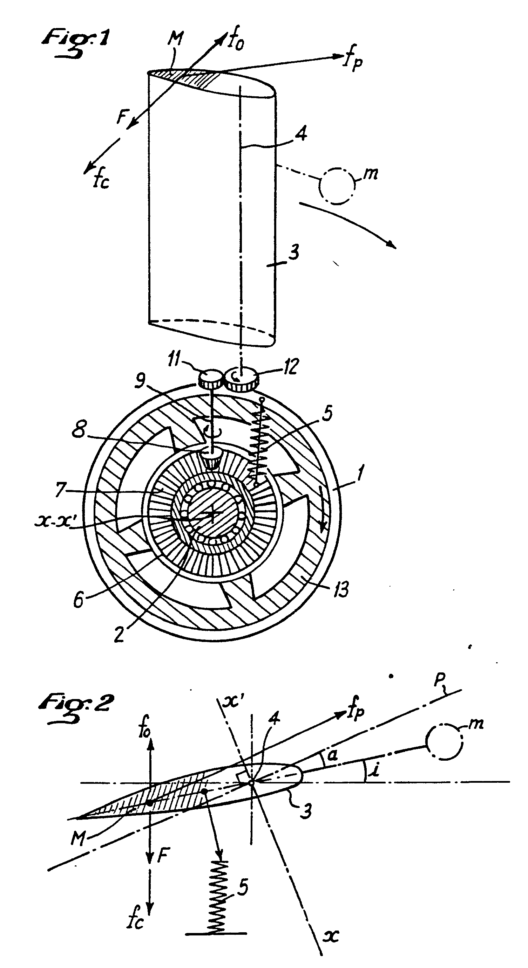

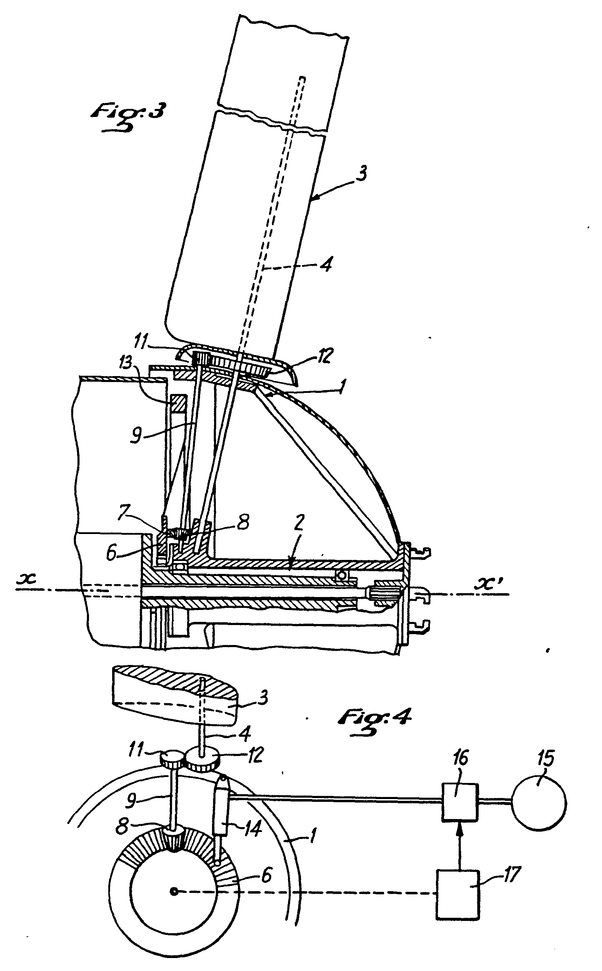

Sur la figure 1 est représenté schématiquement le bâti 1 d'un rotor solidaire d'un moyeu central 2 et sur lequel sont montées plusieurs pales 3. La description détaillée d'un tel aérogénérateur est donnée dans le brevet françois N° FR 2 291 378. Les pales 3 du rotor sont réparties régulièrement autour de l'axe xx' du moyeu 2, chacune de ces pales 3 étant elle-même montée à pivotement autour d'un axe 4 qui est, de préférence, incliné vers l'avant par rapport à l'axe de rotation xx' du rotor. L'axe 4 de chaque pale 3 est décalé vers le bord d'attaque de la pale, en étant situé sensiblement ou quart avant de la pale, si bien que la masse avant de la pale comprise entre ce bord d'attaque et l'axe 4 est inférieure à la masse arrière située à l'opposé de l'axe 4 et que par conséquent, pendant la rotation du rotor, chaque pale 3 est soumise à une force centrifuge indiquée par la flèche $f_o$, lorsque le rotor tourne à une vitesse $V_o$. Cette force est due à l'énergie cinétique de la partie de la masse arrière de la pale 3 qui n'est pas équilibrée par la partie avant. Cette masse arrière en déséquilibre ou perturbatrice M est indiquée en hachures sur les figures 1 et 2.

Le rotor de l'aérogénérateur est pourvu d'un dispositif de régulation assurant un équilibrage dynamique des pales 3 et qui comporte par exemple, pour chaque pale 3, un organe élastique de rappel 5, dont une extrémité est liée au bâti 1 du rotor et l'autre extrémité est accrochée à un plateau du régulation transversal circulaire 6 monté à rotation sur le moyeu 2 du rotor et portant une couronne dentée 7 centrée sur l'axe xx' du rotor. Avec cette couronne est en prise, pour chaque pale 3, un pignon conique 8 solidaire d'une tige 9 laquelle porte à son extrémité un pignon 11 en prise avec un autre pignon 12 centré sur l'axe 4 de la pale 3 et solidaire de celle-ci. Par conséquent, lorsque le rotor tourne à la vi-tesse $V_o$, la pale 3 tend, du fait de son déséquilibre dynamique, à faire tourner la couronne 7 et le plateau de régulation 6 dans le sens inverse des aiguilles d'une montre sur le figure 1, c'est-à-dire en fait en sens inverse de la rotation du rotor, sous l'action de la force centrifuge $f_o$, et l'organe élastique de rappel 5 exerce sur le plateau de régulation 6 une poussée qui est transmise à la pale 3 et qui donne une force F s'opposant à le force centrifuge $f_o$ comme en peut le voir sur la figure 2. De ce fait chaque pale 3 est maintenue inclinée d'un angle *a* par rapport au plan transversal de rotation P passsant par l'axe de pivotement 4 de la pale 3, est angle *a* étant la valeur d'équilibre correspondant à la vitesse nominale de rotation. Un tel dispositif réalise ainsi un système de régulation centrifuge.

Lors d'un ralentissement de la rotation de l'hélice pour une raison quelconque, par exemple une baisse du vent, l'énergie cinétique de la masse arrière en déséquilibre M donne lieu à l'apparition d'une force perturbatrice $f_p$ qui tend à faire pivoter la pale 3 vers la mise en drapeau, c'est-à-dire à l'alignement dans le plan contenant l'axe de rotation xx' et l'axe de pivotement 4.

Pour compenser cette force perturbatrice $f_p$, l'aérogénérateur comporte, suivant l'invention, des moyens créant une force compensatrice $f_c$ s'opposant à le force perturbatrice $f_p$.

Sur les figures 1 et 3 la force compensatrice $f_c$ est engendrée par un anneau 13 solidaire du plateau de régulation 6 et formant volant d'inertie. Cet anneau 13 présente de préférence le plus grand diamètre possible pouvant être contenu à l'intérieur du bâti 1 du rotor, afin de limiter la masse de cet anneau; sans introduire de perturbations aérodynamiques.

Par conséquent, on cas de décélération du rotor, l'anneau 13 formant volant d'inertie tend à faire tourner additionnellement le plateau de régulation 6, dans le sens de rotation, et cette rotation se traduit par un couple exercé sur la pale 3 donnant lieu à la création de la force compensatrice $f_c$. Cette force compensatrice $f_c$ annule donc la force perturbatrice $f_p$ si bien que la pale 3 conserve son angle d'incidence optimal *i*.

D'autres moyens peuvent être prévus pour créer la force compensatrice $f_c$ en cas de décélération du rotor.

Ces moyens peuvent être constitués, par exemple, par une masse compensatrice m placée sur l'avant du profil de chaque pale 3, en opposition à la masse arrière perturbatrice M. Cette masse m est indiquée en trait mixte sur les figures 1 et 2.

Une ature forme d'exécution est illustrée schématiquement sur la figure 4. Dans ce cas les organes de rappel élastiques des pales 3 sont constitués par des vérins hydrauliques ou pneumatiques 14 montés entre le bâti 1 du rotor et le plateau de régulation 6. Chaque vérin 14 est relié à une source de fluide sous pression 15 par l'intermédiaire d'un organe de contrôle de débit ou de pression 16 lui-même commandé par un dispositif comprenant une masse inertielle 17. Par conséquent en cas de décélération du rotor le dispositif de commande à masse inertielle 17 agit sur l'organe 16 pour alimenter additionnellement le vérin 14 et faire tourner le plateau de régulation 6 dans lesens donnant lieu à la création de la force compensatrice $f_c$.

**Revendications**

1. Aérogénérateur ou moteur à vent comportant un rotor à hélice à pas variable régulant vers la mise en drapeau, dont les pales (3) sont montées pivotantes autour de leurs axes respectifs (4), en étant elles-mêmes déséquillibrées dynamiquement et présentant de ce fait une masse arrière en déséquilibre ou perturbatrice (M), et un dispositif élastique de régulation mécanique d'équilibre de la position des pales exerçant sur chacune des pales une force de régulation résultant de l'action antagoniste d'une force dépendant de la vitesse de rotation et d'une force de rappel élastique, cette force de régulation assurant le maintien de la pale dans la position angulaire voulue autour de son axe respectif lorsque le rotor tourne à sa vitesse nominale, caractérisé en ce qu'il comporte des moyens de compensation (m, 13) sensibles à la décélération du rotor pour exercer automatiquement et immédiatement sur chaque pale, en cas de décélération du rotor, une force différente des forces en équilibre assurant la régulation, cette force étant sensiblement égale et opposée à la force perturbatrice créée par l'énergie cinétique de la masse arrière ou en déséquilibre de la pale de manière à bloquer instantanément la pale dès le début de la décélération dans la position angulaire qu'elle occupe alors.

2. Aérogénérateur ou moteur à vent suivant la revendication 1 caractérisé en ce que les moyens de compensation sont constitués par une masse (m) placée sur l'avant du profil de chaque pale (3), en opposition à la masse perturbatrice (M), et supportée uniquement par la pale.

3. Aérogénérateur ou moteur à vent suivant la revendication 1, dans lequel le rotor comporte un dispositif de régulation comprenant un plateau de régulation coaxial (6) ou tout autre dispositif similaire pouvant subir un débattement angulaire déterminé par rapport au rotor, des moyens de transmission (7—12) pour transmettre le mouvement de pivotement des pales (3) autour de leurs axes (4) à ce plateau de régulation (6) et des organes de rappel élastiques (5) disposés entre le bâti (1) du rotor et le plateau de régulation (6), afin de maintenir les pales (3) dans la position angulaire voulue, autour de leurs axes respectifs, lorsque le rotor tourne à sa vitesse nominale, la liaison entre les pales (3) et le plateau (6) étant telle que le ralentissement du plateau par rapport au rotor entraîne une augmentation du pas des pales allant jusqu'à la mise en drapeau et qu'au contraire une accélération du plateau entraîne une diminution du pas, caractérisé en ce que les moyens de compensation sont constitués par un anneau (13) solidaire du plateau de régulation (6), ayant un diamètre supérieur à celui du plateau de régulation (6) cet anneau formant un volant d'inertie.

4. Aérogénérateur ou moteur 4 vent suivant la revendication 3 caractérisé en ce que les moyens de compensation sont constitués, lorsque les organes de rappel élastiques des pales sont réalisés par des dispositifs hydrauliques (14), par des moyens (15, 16) agissant sur le débit et la pression d'alimentation de ces dispositifs hydrauliques, dans le but de compenser force perturbatrice engendrée par la masse arrière en déséquilibre.

**Patentansprüche**

1. Aerogenerator oder Windmotor mit einer Luftschraube mit veränderbarer Anstellung gegen die Windrichtung, deren Blätter um ihre jeweiligen Achsen verschwenkbar gelagert sind, wobei sie selbst dynamisch unausgeglichen sind und eine unausgeglichene oder störende hintere Masse (M) aufweisen, und mit einer elastischen Einrichtung zur mechanischen Regelung der Ausgeglichenheit der Position der Blätter, die auf jedes Blatt eine Regelkraft ausübt, die aus der entgegengesetzten Wirkung einer Kraft resultiert, die von der Rotationsgeschwindigkeit und einer elastischen Rückstellkraft abhängig ist, wobei diese Regelkraft sicherstellt, daß das Blatt in der in Bezug auf seine Achse, um die sich der Rotor bei seiner Nenngeschwindigkeit dreht, gewünschten Wickelstellung gehälten wird, dadurch gekennzeichnet, daß er Kompensationsmittel (m, 13) umfaßt, die auf die Verzogerung des Rotors ansprechen, um automatisch und sofort bei einer Verzögerung des Rotors auf jedes Blatt eine Kraft auszuüben, die verschieden ist von den ausgeglichenen Kräften und die Regulierung sicherstellt, wobei diese Kraft im wesentlichen gleich und entgegengesetzt ist zu der störenden Kraft, die durch die kinetische Energie der hinteren oder in Bezug auf das Blatt unausgeglichenen Masse erzeugt wird, derart, daß unverzüglich das Blatt in der von ihm dann eingenommenen Winkelstellung blockiert wird, sobald die Verzögerung beginnt.

2. Aerogenerator oder Windmotor nach Anspruch 1, dadurch gekennzeichnet, daß die Kompensationsmittel durch eine Masse (m) gebildet werden, die vor dem Profil eines jeden Blatts (3) der störenden Masse (M) gegenüberliegen angeordnet ist und nur vom Blatt getragen wird.

3. Aerogenerator oder Windmotor nach Anspruch 1, dessen Rotor mit einer Regelvorrichtung versehen ist, die eine koaxiale Regelscheibe (6) oder jede andere, ähnliche, zur Ausführung einer determinierten Winkelbewegung in Bezug auf den Rotor geeignete Vorrichtung umfaßt, mit Übertragungsmitteln (7—12) zur Übertragung der Schwenkbewegung der Blatter (3) um ihre Achsen (4) auf diese Regelscheibe (6), und mit elastischen Rückholorganen (5) zwischen dem Grundkörper (1) des Rotors und der Regelscheibe (6), um die Blätter (3) in der gewünschten Winkelstellung um ihre jeweiligen Achsen zu halten, wenn sich der Rotor mit seiner Nenngeschwindigkeit dreht, wobei die Verbindung zwischen des Blättern (3) und der Regelscheibe (6) derart ausgebildet ist, daß eine Verzögerung der Regelscheibe gegenüber dem Rotor eine Vergrößerung der Steigung der Blätter zur Folge hat, die bis zur Einstellung in die Windrichtung geht, und daß im Gegensatz hierzu eine Beschleunigung der Regelscheibe eine Verringerung der Steigung zur Folge hat, dadurch gekennzeichnet, daß die Kompensationsmittel von einem Ring (13) gebildet werden, der fest mit der Regelscheibe (6) verbunden ist, einen Durchmesser aufweist, der größer ist als der der Regelscheibe (6) und eine radförmige träge Masse bildet.

4. Aerogenerator oder Windmotor nach Anspruch 3, dadurch gekennzeichnet, daß, wenn die elastischen Rückholorgane der Blätter aus hydraulischen Einrichtungen (14) bestehen, die Kompensationsmittel von Mitteln (15, 16) gebildet werden, die die Fördermenge und den Speisedruck für diese hydraulischen Einrichtungen beeinflussen, um die störende Kraft zu kompensieren, die von der hinteren, unausgeglichenen Masse erzeugt wird.

**Claims**

1. Aerogenerator or wind-powered engine comprising a rotor with variable pitch propeller, regulating towards feathering of which the blades (3) are mounted to pivot about their respective axes (4), whilst being dynamically out of-balance and consequently presenting an out-of-balance or disturbing rear masse (M) and an elastic device for mechanically regulating equilibrium of the position of the blades exerting on each of the blades a regulating force resulting from the antagonistic action of a force dependent on the speed of rotation and of an elastic return force, this regulating force maintaining the blade in the desired angular position about its respective axis when the rotor rotates at its nominal speed, characterized in that it comprises compensating means (m, 13) sensitive to the deceleration of the rotor in order automatically and immediately to exert on each blade, in the event of deceleration of the rotor, a force different from the forces in equilibrium ensuring regulation, this force being substantially equal and opposite to the disturbing force created by the kinetic energy of the rear or out-of balance mass of the blade so as instantaneously to block the blade as from the beginning of deceleration in the angular position that it then occupies.

2. Aerogenerator or wind-powered engine according to claim 1, wherein the compensating means are constituted, for each blade, by a mass (m) placed on the front of the profile of the blade (3) opposite the disturbing rear mass (M) and carried only by the blade (3).

3. Aerogenerator or wind-powered engine according to claim 1 in which the motor comprises a regulation device comprising a coaxial regulation plate (6) or any other like device likely to be subjected to a determined angular clearance with respect to the rotor, transmission means (7—12) for transmitting the pivoting movement of the blades (3) about their axes (4) to said regulation plate (6) and elastic return members (5) disposed between the frame (1) of the rotor and the regulation plate (6) in order to maintain the blades (3) in the desired angular position, about their respective axes, when the rotor rotates at its nominal speed, the connection between the blades (3) and the plate (6) being such that the slowing down of the plate with respect to the rotor brings about an increase in the pitch of the blades going as far as feathering and, on the contrary, an acceleration of the plate brings about a decrease in the pitch, characterized in that the compensating means are constituted by a ring (13) fast with the regulation plate (6), having a diameter greater than the diameter of the regulation plate (6), this ring forming an inertia flywheel.

4. Aerogenerator or wind-powered engine according to claim 3, wherein the compensating means are constituted, when the elastic return members of the blade are constituted by hydraulic devices (14), by means (15, 16) acting on the flowrate and supply pressure of these hydraulic devices, with a view to compensating the disturbing force created by the out-of-balance rear mass.

Fig.1

Fig.2

0 121 636

Fig. 3

3

4

11

12

13

1

9

7

8

2

6

x                                               x'

3

4

11                    12

9

8                    14                    1

6

16                    15

17

Fig. 4

2